Europäisches Patentamt

European Patent Office

Office européen des brevets

(11) Publication number: **0 329 409**
A2

# EUROPEAN PATENT APPLICATION

(21) Application number: 89301435.7

(22) Date of filing: 15.02.89

(51) Int. Cl.⁴: **E 21 B 43/02**

(30) Priority: 18.02.88 GB 8803755

(43) Date of publication of application:
23.08.89 Bulletin 89/34

(84) Designated Contracting States:
BE DE FR GB NL SE

(71) Applicant: ALLIED COLLOIDS LIMITED
P.O. Box 38 Low Moor
Bradford West Yorkshire, BD12 0JZ (GB)

(72) Inventor: Macdonald, Alister Rodney Frederick
19 Lyster Crescent
Randpark Bridge Randburg (ZA)

Harrison, Douglas
15 Doringlaan
Petersfield Ext. 1 Springs (ZA)

(74) Representative: Lawrence, Peter Robin Broughton et al
GILL JENNINGS & EVERY 53-64 Chancery Lane
London WC2A 1HN (GB)

(54) **Backfilling process.**

(57) A subterranean chamber is backfilled using a slurry of fine particulate material that has been flocculated using a water soluble polymeric flocculant formed from monomeric material that comprises 2-acrylamido methyl propane sulphonate or other sulphonic monomer.

EP 0 329 409 A2

Bundesdruckerei Berlin

**Description**

**Backfilling Process**

The invention relates to backfilling subterranean, generally inclined, chambers, for instance to reduce the voidage in old or new mine workings.

Backfilling is conducted by pumping a slurry of fine particulate material into the desired location, holding it in that location, for instance by a permeable screen, allowing it to dewater by drainage and allowing it to settle and to acquire the desired rigidity and strength. Cement or other binder may be included to increase strength.

The slurries tend to contain a large slime component. The presence of the slime makes the drainage occur slowly and the liquid that does drain from the backfilling slurry is likely to be contaminated with slime. Backfill drainage liquor usually accumulates with other mine effulent which carries natural mine sludges having a high mineral content. These mineral rich sludges are usually pumped to the surface for treatment. However, a significant slimes content in the backfill drainage liquor dilutes the mineral value of these sludges to such an extent that the treatment cost exceeds the recovery value.

The rheology of the slurry must change rapidly after backfilling and lead to sufficient early strength to avoid the exertion of unfavourably high fluid pressure on the backfill supports. The backfill must also, of course, acquire satisfactory final strength.

One method that has been adopted for minimising the problems due to slime involves subjecting the slurries to exhaustive desliming prior to their use as backfill. Unfortunately drainage still tends to be slow and the strength of the resultant backfill tends to be reduced, because of the reduced amount of slime particles in the final retained backfill.

Another method involves flocculating the slurry while backfilling. Typical flocculants are high molecular weight, water soluble copolymers of acrylamide and sodium acrylate. The flocculated slurry can drain more quickly than the unflocculated and can have higher compressive strength, because of the increased retention of slime particles. It can give a more compact backfill, but unfortunately increasing the compaction tends to increase the water retention (even though drainage may be fast). This is a particular problem since it is relatively easy to add too much flocculating agent and this results in particularly high water retention by the backfill at the end of the initial dewatering by drainage. High water retention causes significant long term shrinkage as the retained water gradually escapes and so, if the initial settled volume of backfill is to be maintained, it is necessary to refill under pressure after initial settlement.

It is known to use other flocculating agents for flocculating various other slurries to give compacted solids. In U.S. 4,342,653 it is proposed that greater compaction can be obtained when flocculating phosphate slime, uranium or copper acid leach residue, copper tailings, coal or coal refuse if the flocculating agent is a copolymer of acrylamide and 2-acrylamido-2-methyl propane sulphonate (AMPS). Since the compacted deposits obtained using conventional, acrylic acid, flocculants retain more water than unflocculated products, it would be expected that the higher degrees of compaction proposed in U.S. 4,342,653 would lead to higher water retention and to long term shrinkage problems that are even more serious than those with conventional flocculants.

There is therefore a need for an improved way of treating the slurry, especially when it has a significant slime content, so as to give rapid drainage, rapid early rheology and strength properties, good compaction and good final strength, whilst having satisfactorily low water retention, thereby giving satisfactorily low shrinkage.

According to the invention a subterranean chamber is backfilled using a slurry of fine particulate material that has been flocculated by a flocculating agent that is a polymeric flocculant formed from water soluble ethylenically unsaturated monomeric material comprising an ethylenically unsaturated sulphonate.

The polymeric flocculant will be water soluble and will generally be substantially linear although small amounts of cross linking (e.g., as in EP-A-0202780) can be tolerated or useful in some instances. The polymer should have high molecular weight, the intrinsic viscosity generally being at least 4dl/g, preferably 6 to 15 or more, often 7 to 11, dl/g.

Suitable monomers are (meth) allyl sulphonate, vinyl sulphonate, sulphopropyl acrylate, acrylamido phenyl propane sulphonate, and, preferably 2-acrylamido methyl propane sulphonate. The sulphonate monomer is generally introduced as a sodium salt or other water soluble salt. Although various polymerisable sulphonic acids can be used in the invention, it is particularly preferred to use propane sulphonates.

The polymeric flocculant can be a homopolymer of the sulphonate monomer but is generally a copolymer formed with one or more comonomers. The comonomer can comprise a carboxylic monomer, such as (meth) acrylic acid (or soluble salt), generally in a lesser amount than the sulphonate monomer. Preferably however the comonomer includes, and most preferably consists substantially only of, non-ionic monomer. Such monomers include monomers such as hydroxy ethyl (meth) acrylates or other hydroxy alkyl (meth) acrylates but the preferred non-ionic monomer is (meth) acrylamide.

The preferred polymers for use in the invention are those in which the sulphonate monomer is present at a weight percentage of from 20 to 100% generally 25 to 80%, preferably 35 to 70%, with the balance preferably being acrylamide. Preferably it is a propane sulphonic monomer and in particular a polymeric flocculant which comprises repeating units derived from acrylamide and 2-acrylamido methyl propane sulphonate (AMPS) in the preferred quantities.

The flocculant polymer can be supplied as a powder, dispersion or concentrated solution and can be converted to a dilute aqueous solution in conventional manner.

The amount of polymer that is added to the slurry is generally from 5 to 100g/tonne based on the dry weight of solids. Generally the amount is between 15 to 40g/tonne.

The solution is added to the slurry that is to be flocculated in conventional manner. This slurry typically is of tailings but can be of any other suitable particulate material, generally having a high slime content.

Backfilling with the flocculated slurry may be performed in broadly conventional manner, with the flocculated slurry being pumped into place and generally held in position by a backfill support that is usually a porous support that will act as a filter wall, for instance a textile screen such as hessian cloth. The chamber is usually an inclined chamber.

The process of the invention can result in rapid drainage and in a surprising reduction in water retention even when there is a significant overdose of flocculant. Accordingly the backfill suffers from substantially less long term shrinkage than backfills made using conventional flocculants and the problems of easy over flocculation associated with usual flocculation procedures are diminished. Also the rheology of the flocculated slurry changes very quickly after flocculation and so reduces the fluid pressure that is liable to be exerted by the flocculated slurry on the backfill supports and so this reduces the need for bracing the textile screens or other supports.

The drainage water has a very satisfactorily low content of colloidal material and so increased colloidal content can be tolerated without adverse drainage effects, and this in turn can lead to enhanced early and final strength of the backfill.

A further advantage of the invention is that it is unnecessary to include a binder, such as a cement binder. This minimises health hazards to the skin and the risk of backfill fracture due to high early pressure acting on a backfill that has early rigidity.

The following examples illustrate the invention.

EXAMPLE 1

Various polymers were tested for use as backfilling flocculants. The polymers had the compositions shown in Table 1. The test consisted of adding each of the polymer samples to a 500ml sample of backfull pulp at a weight ratio of polymer to pulp of $1.6 \times 10^{-5}$:1 (equivalent to a working concentration of 16g/tonne).

Table 2 shows the initial settled pulp volume measured at 10, 20 and 30 minutes from addition of the cationic, nonionic or anionic polymer. A comparative sample is taken for each test, wherein the initial settled pulp volume is measured for a sample having no added polymer.

Table 3 compares the volumes of released water expressed as a percentage of the volume achieved by the same sample, unflocculated, after 30 minutes settling.

Tables 4 and 5 are analogous to tables 2 and 3 respectively. However, all of the examples of polymers tested in tables 4 and 5 are various AMPS copolymers of the invention added at the lower dosage of 10g/tonne.

TABLE 1

COPOLYMER COMPOSITIONS

| Polymer | Intrinsic Viscosity | Cationic | Sodium Acrylate | Nonionic Acrylamide | Sodium AMPS |
|---------|---------------------|----------|-----------------|---------------------|-------------|
| A | | 5% | - | 95% | - |
| B | | - | 3% | 97% | - |
| C | | - | 40% | 60% | - |
| D | | - | - | 100% | - |
| E | | - | - | 46% | 54% |
| F | 11.0 | - | - | 36% | 64% |
| G | 11.9 | - | - | 40% | 60% |
| H | 7.7 | - | - | 42% | 58% |
| I | 11.0 | - | - | 43% | 57% |
| J | 6.71 | - | - | 60% | 40% |

TABLE 2

| Copolymer | | A | B | C | D | E |
|---|---|---|---|---|---|---|
| Dosage (g/tonne) | Time (mins) | | | | | |
| 0 | 10 | 0.427 | 0.420 | 0.430 | 0.430 | 0.424 |
| 16 | 10 | 0.416 | 0.410 | 0.418 | 0.416 | 0.407 |
| 0 | 20 | 0.404 | 0.396 | 0.402 | 0.406 | 0.404 |
| 16 | 20 | 0.412 | 0.407 | 0.415 | 0.413 | 0.405 |
| 0 | 30 | 0.404 | 0.396 | 0.401 | 0.406· | 0.404 |
| 16 | 30 | 0.412 | 0.406 | 0.415 | 0.413 | 0.404 |

TABLE 3

| Copolymer | | A | B | C | D | E |
|---|---|---|---|---|---|---|
| Dosage (g/tonne) | Time (mins) | | | | | |
| 0 | 10 | 76.0% | 79.9% | 70.7% | 74.5% | 79.2% |
| 16 | 10 | 87.5% | 86.5% | 82.8% | 89.4% | 96.9% |
| 0 | 20 | 100% | 100% | 99.0% | 100% | 100% |
| 16 | 20 | 91.7% | 89.4% | 85.9% | 92.5% | 99.0% |
| 0 | 30 | 100% | 100% | 100% | 100% | 100% |
| 16 | 30 | 91.7% | 90.4% | 85.9% | 91.5% | 100% |

TABLE 4

| Copolymer | | F | G | H | I | J |
|---|---|---|---|---|---|---|
| Dosage (g/tonne) | Time (mins) | | | | | |
| 0 | 60 | 0.312 | 0.314 | 0.308 | 0.312 | 0.313 |
| 10 | 12 | 0.306 | 0.306 | 0.306 | 0.310 | 0.311 |
| 10 | 25 | 0.270 | 0.297 | 0.302 | 0.292 | 0.267 |

Table 5

| Copolymer | | F | G | H | I | J |
|---|---|---|---|---|---|---|
| Dosage (g/tonne) | Time (mins) | | | | | |
| 0 | 60 | 100% | 100% | 100% | 100% | 100% |
| 10 | 12 | 103.2% | 104.3% | 101.0% | 101.1% | 101.1% |
| 10 | 25 | 122.3% | 109.1% | 103.1% | 110.6% | 124.6% |

Table 2 illustrates the increased volume of initial settled pulp after 30 minutes settlement when using a typical flocculant A-D, which can lead to the problems of voidage mentioned above resulting from the pulp gradually drying out. In comparison, it can be seen that the AMPS copolymer E of the invention does not result in increased pulp volume, and therefore does not produce gradual further settling.

Table 3 illustrates the water retention caused by the conventional polymers relative to the sulphonate polymer of the invention.

Table 4 illustrates the beneficial decrease in initial settled volume of the pulp achieved by using an sulphonate polymer of the invention which will avoid any later problems of shrinkage of the pulp found with conventional flocculants. Table 5 illustrates the beneficial increased early water run-off achieved using the sulphonate polymers of the invention.

EXAMPLE 2

In a working place dipping at 25°, a copolymer of 60% Na AMPS 40% acrylamide and IV 11.9 was applied to backfill pulps and found to promote very early high strength with good slimes retention. Subjective tests were done as follows:-

1. A vertical 200mm slit was cut in the bag at a place halfway between hanging the roof and the floor where slimefill surface has been 40 minutes previously. The slit was not drawn open by tension on the bag circumference. This indicated that the fill had achieved dead settlement and was no longer fluid. The slimefill did not ooze through the slit even though the surrounding fill wall was pounded to upset thixotropic effects.

2. A vertical 100mm slit was cut in the bag at a similar height where filling surface had been 20 minutes previously. The slit was drawn opne due to the pressure of fluid pulp and water on the upper quarter of the circumference of the bag. The slimefill did not ooze through the slit indicating that dead settlement had been achieved.

Similar tests done on the most suitable acrylamide polymers always resulted in extrusion of fluid slimes through the dilated slit aperture for long periods after placement of slimes.

**Claims**

1. A process in which a subterranean chamber is backfilled using a slurry of fine particulate material that has been flocculated by a flocculating agent that is a polymeric flocculant formed from water soluble ethylenically unsaturated monomeric material, characterised in that the monomeric material comprises an ethylenically unsaturated sulphonate.

2. A process according to claim 1 in which the sulphonate monomer comprises 2-acrylamido methyl propane sulphonate.

3. A process according to claim 1 or claim 2 in which the monomeric material also includes non-ionic monomer.

4. A process according to claim 1 or claim 2 in which the polymer is formed from 20 to 50% sulphonate monomer and 0 to 80% acrylamide.

5. A process according to claim 1 or claim 2 in which the polymer is formed from 35 to 70% sulphonate monomer and 65 to 30% by weight acrylamide.

6. A process according to any preceding claim in which the slurry is free of cement or other binder.